# FASCICULE DE BREVET EUROPEEN

(11) **EP 2 501 647 B1**
(45) Date de publication et mention de la délivrance du brevet: **26.02.2014**
(21) Numéro de dépôt: 10792995.2
(22) Date de dépôt: 15.11.2010
(51) Int. Cl.: C01B 21/09, C25B 1/00, C25B 1/26

(54) **Procédé de préparation d'une solution comprenant de la monochloramine**
Verfahren zur Herstellung einer Monochloramin-enthaltenden Lösung
Method for preparing a solution containing monochloramine

(30) Priorité: 16.11.2009 FR 0958063
(43) Date de publication de la demande: 26.09.2012
(73) Titulaire: Centre National de la Recherche Scientifique CNRS, 75016 Paris (FR)
(72) Inventeur: DEBIEMME-CHOUVY, Catherine, F-94100 Saint Maur des Fosses (FR)
(74) Mandataire: Domenego, Bertrand
(86) Numéro de dépôt international: PCT/FR2010/052421
(87) Numéro de publication internationale: WO 2011/058282

(56) Documents cités:
- WO-A1-2008/091678
- BERGMANN ET AL: "Product and by-product formation in laboratory studies on disinfection electrolysis of water using boron-doped diamond anodes", CATALYSIS TODAY, ELSEVIER, NL, vol. 124, no. 3-4, 14 juin 2007 (2007-06-14), pages 198-203, XP022116897, ISSN: 0920-5861, DOI: 10.1016/j.cattod.2007.03.038
- WHITE G C: "Chapter 4: Chemistry of Chlorination", HANDBOOK OF CHLORINATION AND ALTERNATIVE DISINFECTANTS, no. 4th ed, 1 janvier 1999 (1999-01-01), pages 212-287, XP009094450,
- VLYSSIDES A G ET AL: "Electrochemical treatment in relation to pH of domestic wastewater using Ti/Pt electrodes", JOURNAL OF HAZARDOUS MATERIALS 20021111 ELSEVIER NL, vol. 95, no. 1-2, 11 novembre 2002 (2002-11-11), pages 215-226, XP002590411, DOI: 10.1016/S0304-3894(02)00143-7
- JIEFEI YU ET AL: "Two-stage Sequential Electrochemical Treatment of Nitrate Brine Wastes", WATER, AIR AND SOIL POLLUTION: FOCUS, KLUWER ACADEMIC PUBLISHERS, DO, vol. 8, no. 3-4, 21 novembre 2007 (2007-11-21), pages 379-385, XP019616709, ISSN: 1573-2940
- SZPYRKOWICZ L ET AL: "Removal of NO3<-> from water by electrochemical reduction in different reactor configurations", APPLIED CATALYSIS B: ENVIRONMENTAL, ELSEVIER LNKD- DOI:10.1016/J.APCATB.2006.02.020, vol. 66, no. 1-2, 20 juin 2006 (2006-06-20), pages 40-50, XP025141690, ISSN: 0926-3373 [extrait le 2006-06-20]

## Description

La présente invention concerne un procédé de préparation d'une solution aqueuse comprenant de la monochloramine, et, selon certains modes de réalisation, des ions hypochlorite, utile notamment comme solution désinfectante.

Une désinfection est dite primaire si elle permet de détruire les microorganismes et une désinfection est dite secondaire si elle permet d'éviter une recontamination. Les ions hypochlorite sont un désinfectant primaire et la monochloramine est un désinfectant secondaire.

La littérature rapporte la synthèse de la monochloramine par réaction d'ions hypochlorite avec des ions ammonium.

La demande de brevet US 2004/0086577 rapporte un procédé de préparation de monochloramine comprenant les étapes consistant à basifier une solution d'hypochlorite de sodium avec une base inorganique puis à faire réagir l'hypochlorite de sodium basifié avec une solution de chlorure d'ammonium. Ce procédé a l'inconvénient d'impliquer la manipulation de solutions d'eau de javel et d'ammoniaque toxiques.

Par ailleurs, la demande internationale W02008/091678 décrit un procédé de préparation de biocide haloaminé comprenant les étapes de :
a) charger une cellule électrochimique avec une solution comprenant un halogénure,
b) générer électrochimiquement une espèce active donneuse d'halogène,
c) mettre en contact cette espèce active avec une solution comprenant une amine.
L'exemple 1 décrit la synthèse de monochloramine par mélange d'une solution aqueuse d'ammoniaque avec des ions hypochlorite obtenus par oxydation des ions chlorure d'une solution de chlorure de sodium. Ce procédé a toutefois l'inconvénient d'impliquer la manipulation de solution d'ammoniaque toxique.

Par ailleurs, divers procédés de synthèse d'ions hypochlorite sont connus de l'art antérieur. Par exemple, les sociétés Oxilite^{®} et Avipur^{®} commercialisent le dispositif Oximat^{®} qui permet de préparer des ions hypochlorite par oxydation d'ions chlorure à partir d'une solution de départ comprenant du chlorure de sodium. De même, le système de désinfection de l'eau OXIPRO^{®} met en oeuvre une oxydation d'ions chlorure en ions hypochlorite.

Un objectif de la présente invention est de fournir un procédé de préparation d'une solution comprenant de la monochloramine, qui permet notamment de pallier les inconvénients précités.

A cet effet, selon un premier aspect, l'invention a pour objet un procédé de préparation d'une solution comprenant de la monochloramine, comprenant les étapes où :
a) dans un électrolyseur comprenant une zone anodique et une zone cathodique séparées par une membrane limitant la migration des ions hypochlorite :
   - dans la zone anodique, on forme des ions hypochlorite par oxydation d'ions chlorure en solution aqueuse, et
   - dans la zone cathodique, on forme des ions ammonium par réduction d'ions nitrate et/ou nitrite en solution aqueuse, et
b) on fait réagir les ions ammonium et au moins une partie des ions hypochlorite avec un ratio molaire ions hypochlorite / ions ammonium supérieur ou égal à 1, ce par quoi on forme de la monochloramine.

Le procédé selon l'invention met en oeuvre des ions chlorure et nitrate et/ou nitrite comme produits de départ, qui ont l'avantage d'être peu onéreux.

Les réactions mises en oeuvre dans ce procédé sont les suivantes : Lors de l'étape a), à l'anode :

2 Cl⁻ → Cl₂ + 2 e⁻ puis Cl₂ + H₂O → ClO⁻ + Cl⁻ + 2 H⁺

et à la cathode :

NO₃⁻+6H₂O+8e⁻→ NH₃ + 9 OH⁻

et/ou

NO₂⁻+5 H₂O+6 e⁻ → NH₃ + 7 OH⁻.

Lors de l'étape b) :

ClO⁻ + NH₄⁺→ NH₂Cl + H₂O.

Les deux réactions électrochimiques de l'étape a), à savoir d'une part l'oxydation d'ions chlorure pour former des ions hypochlorite et d'autre part la réduction d'ions nitrate et/ou nitrite pour former des ions ammonium ont lieu dans deux zones distinctes d'un électrolyseur, c'est-à-dire :
- la zone anodique, qui est la zone comprenant une anode et l'électrolyte proche de l'anode, à savoir l'anolyte et dans laquelle a lieu l'oxydation des ions chlorure,
- la zone cathodique, qui est la zone comprenant une cathode et l'électrolyte proche de la cathode, à savoir le catholyte et dans laquelle a lieu la réduction des ions nitrate et/ou nitrite.

Typiquement, la zone anodique comporte une anode capable d'oxyder les ions chlorure avant d'oxyder l'eau. L'anode peut notamment être une anode dimensionnellement stable dite « DSA » (Trasatti, Electrochimica Acta, 45, 2377-2385, 2000). Par exemple, des anodes composées d'oxyde d'étain dopé à l'antimoine ou de diamant dopé bore (BDD) peuvent être utilisées.

La zone cathodique comporte une cathode, qui peut notamment être une électrode de cuivre ou palladium-cuivre.

Les surfaces spécifiques des anodes et cathodes mises en oeuvre dans le procédé peuvent varier dans une large mesure et sont adaptées en fonction de la géométrie de l'électrolyseur et des concentrations en chlorure ou nitrate/nitrite des solutions.

L'électrolyse peut être conduite par tous les moyens connus de l'homme du métier, notamment par application d'une différence de potentiel entre l'anode et la cathode, par ajout d'une électrode de référence afin d'imposer le potentiel de l'anode ou de la cathode, ou en mode galvanostatique.

Les deux zones anodique et cathodique de l'électrolyseur sont séparées par une membrane permettant de minimiser, voire d'empêcher, la migration des ions hypochlorite vers la cathode qui conduirait à leur réduction en ions chlorure.

Dans un mode de réalisation, la membrane est une membrane en verre fritté ou une membrane cationique, de préférence une membrane Nafion.

Dans la présente demande, on entend par « ions hypochlorite » que les ions hypochlorite peuvent être totalement sous forme basique ou partiellement ou totalement sous leur forme acide : l'acide hypochloreux. De même, on entend par « ion ammonium » que les ions ammonium peuvent être totalement sous forme acide ou partiellement ou totalement sous forme basique : l'ammoniaque.

La solution aqueuse comprenant des ions chlorure qui est mise en oeuvre dans l'étape a) est de préférence une solution aqueuse de chlorure de potassium, de chlorure de sodium. Une solution aqueuse saturée en chlorure de sodium peut notamment être utilisée.

La solution aqueuse comprenant des ions nitrate et/ou nitrite qui est mise en oeuvre dans l'étape a) est de préférence une solution aqueuse de nitrate et/ou nitrite de potassium, de nitrate et/ou nitrite de sodium.

Dans un mode de réalisation, la solution introduite dans la zone cathodique comporte en outre un sel, par exemple du perchlorate de potassium, qui rend la solution plus conductrice et minimise la chute ohmique.

Dans un mode de réalisation, lors de l'étape a), on introduit une même solution aqueuse comprenant des ions chlorure et nitrate et/ou dans les zones anodique et cathodique. Ce mode a l'avantage de n'avoir qu'une seule solution de départ à préparer.

Dans l'étape b), on fait réagir les ions hypochlorite et les ions ammonium formés dans l'étape a) avec un ratio molaire ions hypochlorite / ions ammonium supérieur ou égal à 1, le pH du milieu étant supérieur à 7, ce qui permet de former la monochloramine par la réaction suivante ClO⁻ + NH₄⁺ → NH₂Cl + H₂O en consommant sensiblement la totalité des ions ammonium. La solution obtenue par le procédé est donc sensiblement exempte d'ions ammonium (ou d'ammoniaque).

Il est souhaitable que le pH du milieu lors de l'étape b) soit supérieur à 7, notamment pour éviter la formation de dichloramine voire de trichloramine. A cet effet, il est usuel pour l'homme du métier d'adapter le pH du milieu, par exemple par ajout d'une base (par exemple de l'hydroxyde de sodium) ou d'un acide (par exemple de l'acide chlorhydrique), si besoin.

Typiquement, à la fin de l'étape b), le pH du milieu est compris entre 7,5 et 9,25, notamment entre 8 et 9. Ainsi, l'étape b) est typiquement conduite dans des conditions telles que les ions hypochlorite sont majoritairement sous leur forme basique et les ions ammonium sont majoritairement sous leur forme acide, de façon à optimiser la réaction entre les ions hypochlorite et ammonium pour former la monochloramine. De préférence, le pH du milieu à la fin de l'étape b) est de l'ordre de 8,4. Le pKa du couple acide hypochloreux/ion hypochlorite est en effet 7,5 et celui du couple ammoniaque/ion ammonium est de 9,25.

Dans un mode de réalisation spécifique, le ratio molaire ions hypochlorite / ions ammonium dans l'étape b) est égal à 1. Dans ce cas, la totalité des ions hypochlorite mis en oeuvre dans l'étape b) réagi avec les ions ammonium pour former de la monochloramine lors de l'étape b). La solution obtenue à l'issue de l'étape b) comporte alors de la monochloramine et est sensiblement voire totalement exempte d'ions hypochlorite.

Dans un autre mode de réalisation, lors de l'étape b), le ratio molaire ions hypochlorite / ions ammonium est supérieur à 1. Dans ce cas, seule une partie des ions hypochlorite mis en oeuvre dans l'étape b) réagi avec les ions ammonium pour former de la monochloramine lors de l'étape b). La solution obtenue à l'issue de l'étape b) comporte alors de la monochloramine et des ions hypochlorite. Ce mode de réalisation est particulièrement avantageux car la solution obtenue à l'issue de l'étape b) comporte à la fois un désinfectant primaire (ions hypochlorite) et un désinfectant secondaire (monochoramine). Dans ce cadre, le procédé selon l'invention permet d'obtenir de façon simple et rapide une solution comportant deux types de désinfectants à partir de sels peu onéreux.

La mise en contact entre les ions hypochlorite et les ions ammonium pour réaliser la réaction de l'étape b) peut être effectuée selon toute méthode adaptée.

Dans un premier mode de réalisation, l'étape b) est réalisée par mélange des ions hypochlorite et des ions ammonium dans une zone extérieure aux zones cathodique et anodique.

On entend par zone extérieure une zone qui n'est ni la zone anodique, ni la zone cathodique. Typiquement, les solutions sortant respectivement des zones cathodique et anodique sont mélangées dans un récipient externe à l'électrolyseur.

La réaction de l'étape b) peut alors être effectuée par lot (« batch » en anglais) ou en continu.

Le procédé par lot permet de stocker les solutions intermédiaires (solution comprenant les ions hypochlorite d'une part et solution comprenant les ions ammonium d'autre part) et de mesurer leurs concentrations en ions hypochlorite ou en ammonium et leur pH avant mélange. Il est alors possible de réaliser l'étape a) à partir de solutions de concentrations quelconques en chlorure et/ou nitrate/nitrite puis d'adapter les quantités de solutions à mélanger et/ou leur pH pour réaliser l'étape b).

Le procédé continu consiste à mettre en contact un flux continu sortant de la zone cathodique avec un flux continu sortant de la zone anodique dans la zone extérieure. Dans ce mode de réalisation, la quantité d'ions chlorure dans la solution entrante dans la zone anodique avant électrolyse et la quantité d'ions nitrate/nitrite dans la solution entrante dans la zone cathodique avant électrolyse sont adaptées pour que le ratio molaire ions hypochlorite / ions ammonium soit supérieur ou égal à 1 lors de l'étape b).

Dans un second mode de réalisation, la réaction de l'étape b) est effectuée au sein de la zone anodique.

Typiquement, au moins une partie (et généralement la totalité) des ions ammonium formés dans la zone cathodique lors de l'étape a) est injectée dans la zone anodique. Ce mode de réalisation est généralement effectué en continu. Généralement, le flux sortant du catholyte est injecté dans la zone anodique.

Ce mode de réalisation continu peut notamment mettre en oeuvre une circulation d'une solution aqueuse comportant initialement des ions nitrate et/ou nitrite, qui est d'abord introduite dans la zone cathodique (où a lieu la réduction des ions nitrate et/ou nitrite en ions ammonium) puis conduite dans la zone anodique (où les ions ammonium réagissent avec les ions hypochlorite pour former la monochloramine), ce qui résulte directement en une solution désinfectante prête à l'emploi en sortie de la zone anodique.

Deux modes de réalisation sont notamment envisageables lorsque le procédé est conduit en mode continu.

Dans un mode de réalisation i), la solution introduite dans la zone cathodique comporte des ions nitrate et/ou nitrite et des ions chlorure et seule la solution issue de la zone cathodique (comprenant des ions chlorure et ammonium) est introduite dans la zone anodique. Il n'y a alors qu'un seul flux entrant dans la zone anodique, à savoir le flux sortant de la zone cathodique (comprenant des ions ammonium et chlorure). Dans la zone anodique, les ions chlorure introduits sont oxydés en ions hypochlorite et réagissent avec les ions ammonium pour former la monochloramine. De préférence, au démarrage du procédé, une solution aqueuse comportant des ions chlorure est introduite dans la zone anodique, ce qui conduit à la formation d'ions hypochloreux, qui sont présents dans la zone anodique lorsque le flux sortant de la zone cathodique est injecté. Ensuite, lorsque le procédé continue, les ions chlorure provenant de la zone cathodique sont oxydés en ions hypochlorite dans la zone anodique. Il y a donc des ions hypochlorite présents dans la zone anodique et qui réagissent dans la zone anodique avec les ions ammonium provenant de la zone cathodique.

Dans un autre mode de réalisation ii), dans la zone anodique sont introduits en continu une solution comportant des ions chlorure conjointement à l'introduction du flux sortant de la zone cathodique. Il y a alors deux flux entrant conjointement dans la zone anodique, à savoir un premier flux, dit « flux 1 », sortant de la zone cathodique (comprenant des ions ammonium) et un second flux, dit « flux 2 », celui de la solution comprenant des ions chlorure. Les ions chlorure sont oxydés en ions hypochlorite, qui réagissent partiellement ou totalement avec les ions ammonium issus de la zone cathodique.

Dans un mode de réalisation particulier du mode de réalisation ii), une même solution comprenant des ions nitrate et/ou nitrite et des ions chlorure est injectée à la fois dans la zone cathodique et dans la zone anodique. Dans la zone cathodique, les ions nitrate et/ou nitrite sont réduits en ions ammonium et les ions chlorure ne réagissent pas. Le flux sortant de la zone cathodique comporte donc des ions chlorure et ammonium. Dans la zone anodique sont introduits d'une part ce flux sortant de la zone cathodique comportant des ions chlorure et ammonium (flux 1) et d'autre part la solution comprenant des ions nitrate et/ou nitrite et des ions chlorure (flux 2). Ainsi, les ions ammonium réagissent dans la zone anodique avec ions hypochlorite pour former la monochloramine (étape b). Par ailleurs, les ions chlorure (provenant de la zone cathodique) sont oxydés en ions hypochlorite (oxydation de l'étape a)), ce qui permet avantageusement de réduire la teneur en ions chlorure de la solution désinfectante obtenue. Cette limitation de la teneur en ions chlorure permet avantageusement de limiter les problèmes de corrosion, par exemple de la conduite de sortie du dispositif lorsqu'elle est métallique ou lors des applications de la solution désinfectante si des matériaux métalliques sont utilisés. Ce mode de réalisation a donc l'avantage de permettre l'introduction d'une même solution comprenant des ions nitrate et/ou nitrite et des ions chlorure à la fois dans la zone cathodique et dans la zone anodique et de limiter les problèmes de corrosion. Toutefois, ce mode a l'inconvénient de fournir une solution sortante comprenant des ions nitrate (les ions nitrate introduits dans la zone anodique ne sont pas transformés), et il est donc préférable de mettre en oeuvre les autres modes de réalisation précités lorsqu'une solution appauvrie en ions nitrate est désirée.

Selon un second aspect, l'invention a pour objet un procédé tel que précité de préparation d'une solution désinfectante.

Cette solution désinfectante a de nombreuses utilisations, notamment pour le traitement et la prévention des contaminations microbiennes ou du développement d'un biofilm. Elle peut également être utilisée pour désinfecter de l'eau ou de l'air, par exemple par brumisation de la solution dans l'air à désinfecter.

Lorsqu'une application de désinfection d'eau potable est envisagée, il est préférable d'ajuster la concentration en ions nitrate de la solution aqueuse comportant des ions nitrate mis en oeuvre dans l'étape a) précitée, pour que la concentration en ions nitrate dans l'eau potable traitée par la solution obtenue par le procédé soit inférieure à 8. 10⁻⁴ M, soit à 50 mg L⁻¹.

Les exemples et figures ci-après illustrent le procédé selon l'invention.

### FIGURES

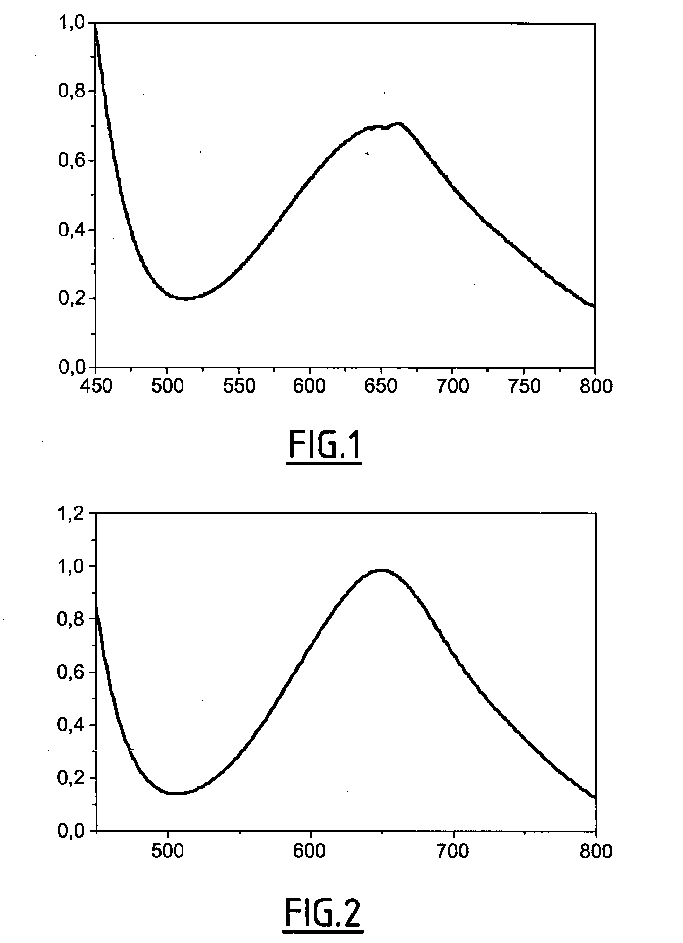

Les figures 1 et 2 représentent l'absorbance optique en fonction de la longueur d'onde en nm des solutions désinfectantes obtenues respectivement à l'exemple 1 et 2 auxquelles a été ajouté du Monochlor F (HACH) pour détecter la présence de monochloramine.

### EXEMPLES

### Exemple 1 : Procédé dans lequel l'anode est l'électrode de travail, électrode de référence : électrode au calomel saturée (ECS)

30 mL d'une solution aqueuse de chlorure de potassium (0,5 M) a été introduite dans la zone anodique et 10 mL d'une solution aqueuse de nitrate de potassium (0,01 M) et de perchlorate de potassium (0,5 M) a été introduite dans la zone cathodique. Une électrolyse a été réalisée à 1,65 V/ECS avec une charge de 2,05 C et avec une anode composée d'oxyde d'étain dopé à l'antimoine de surface de 2 cm² (électrode de travail) et une cathode en cuivre de surface de 0,3 cm² (contre-électrode). Ensuite, 6 mL de l'anolyte et 4 mL du catholyte ont été prélevés et mélangés pour former la monochloramine, dont la présence a été détectée par ajout d'un réactif spécifique, à savoir le Monochlor F^{®} (Hach^{®}) qui provoque une coloration verte lorsqu'il est mis en présence de monochloramine. La figure 1 représente l'absorbance de la solution obtenue en fonction de la longueur d'onde et démontre que la coloration verte a bien été observée.

### Exemple 2 : Procédé dans lequel la cathode est l'électrode de travail

30 mL d'une solution aqueuse de chlorure de potassium (0,5 M) a été introduite dans la zone anodique et 10 mL d'une solution aqueuse de nitrate de potassium (0,01 M) et de perchlorate de potassium (0,5 M) a été introduite dans la zone cathodique.

Une électrolyse a été réalisée à -1,4 V/ECS avec une charge de 4,6 C et avec une anode composée d'oxyde d'étain dopé à l'antimoine de surface de 2 cm² (contre-électrode) et une cathode en cuivre de surface de 0,8 cm² (électrode de travail). Ensuite, 3 mL de l'anolyte et 8 mL du catholyte ont été prélevés et mélangés pour former la monochloramine, dont la présence a été détectée par ajout d'un réactif spécifique, à savoir le Monochlor F^{®} (Hach^{®}) qui provoque une coloration verte lorsqu'il est mis en présence de monochloramine. La figure 2 représente l'absorbance de la solution obtenue en fonction de la longueur d'onde et démontre que la coloration verte a bien été observée.

## Revendications

1. Procédé de préparation d'une solution comprenant de la monochloramine, comprenant les étapes où :
a) dans un électrolyseur comprenant une zone anodique et une zone cathodique séparées par une membrane limitant la migration des ions hypochlorite :
- dans la zone anodique, on forme des ions hypochlorite par oxydation d'ions chlorure en solution aqueuse, et
- dans la zone cathodique, on forme des ions ammonium par réduction d'ions nitrate et/ou nitrite en solution aqueuse, et
b) on fait réagir les ions ammonium et au moins une partie des ions hypochlorite avec un ratio molaire ions hypochlorite / ions ammonium supérieur ou égal à 1, le pH du milieu étant supérieur à 7, ce par quoi on forme de la monochloramine.

2. Procédé de préparation selon la revendication 1 d'une solution comprenant de la monochloramine, dans lequel, lors de l'étape b), on fait réagir les ions hypochlorite et les ions ammonium formés dans l'étape a) avec un ratio molaire ions hypochlorite / ions ammonium égal à 1.

3. Procédé de préparation selon la revendication 1 d'une solution comprenant de la monochloramine et des ions hypochlorite, dans lequel, lors de l'étape b), on fait réagir les ions hypochlorite et les ions ammonium formés dans l'étape a) avec un ratio molaire ions hypochlorite / ions ammonium supérieur à 1.

4. Procédé de préparation selon l'une quelconque des revendications 1 à 3, dans lequel, lors de l'étape a), on introduit une même solution aqueuse comprenant des ions chlorure et nitrate et/ou nitrite dans les zones anodique et cathodique.

5. Procédé de préparation selon l'une quelconque des revendications 1 à 4, dans lequel l'étape b) est réalisée par mélange des ions hypochlorite et des ions ammonium dans une zone extérieure aux zones cathodiques et anodiques.

6. Procédé de préparation selon l'une quelconque des revendications 1 à 4, où la réaction de l'étape b) est effectuée au sein de la zone anodique.

7. Procédé de préparation selon l'une quelconque des revendications 1 à 6, dans lequel, à la fin de l'étape b), le pH du milieu est compris entre 7,5 et 9,25, notamment entre 8 et 9.

8. Procédé de préparation selon l'une quelconque des revendications 1 à 7, dans lequel la zone anodique comporte une anode capable d'oxyder les ions chlorure avant d'oxyder l'eau, notamment une anode dimensionnellement stable, de préférence une anode composée d'oxyde d'étain dopé à l'antimoine ou de diamant dopé bore.

9. Procédé de préparation selon l'une quelconque des revendications 1 à 8, dans lequel la zone cathodique comporte une cathode au cuivre ou au palladium-cuivre.

10. Procédé de préparation selon l'une quelconque des revendications 1 à 9, dans lequel la membrane est une membrane en verre fritté ou une membrane cationique, de préférence une membrane Nafion.

11. Procédé de préparation selon l'une quelconque des revendications 1 à 10, dans lequel une électrode de référence est ajoutée à l'électrolyseur lors de l'étape a) afin d'imposer le potentiel de l'anode ou de la cathode.

12. Procédé selon l'une quelconque des revendications précédentes de préparation d'une solution désinfectante.

## Patentansprüche

1. Verfahren zur Herstellung einer Monochloramin enthaltenden Lösung, die Schritte umfassend, bei denen:
a) in einem Elektrolyseur, der eine anodische Zone und eine kathodische Zone umfasst, die durch eine Membran getrennt sind, die die Migration von Hypochloritionen begrenzt:
- Hypochloritionen in der anodischen Zone durch Oxidation von Chloridionen in einer wässrigen Lösung gebildet werden und
- Ammoniumionen in der kathodischen Zone durch Reduktion von Nitrat- und/oder Nitritionen in einer wässrigen Lösung gebildet werden und
b) die Ammoniumionen und mindestens ein Teil der Hypochloritionen mit einem Molverhältnis von Hypochloritionen/Ammoniumionen größer oder gleich 1 reagieren gelassen werden, wobei der pH-Wert des Mediums größer als 7 ist, wodurch das Monochloramin gebildet wird.

2. Verfahren zur Herstellung einer Monochloramin enthaltenden Lösung nach Anspruch 1, bei dem beim Schritt b) die Hypochloritionen und die Ammoniumionen, die in dem Schritt a) mit einem Molverhältnis Hypochloritionen/Ammoniumionen gleich 1 gebildet werden, reagieren gelassen werden.

3. Verfahren zur Herstellung einer Monochloramin und Hypochloritionen enthaltenden Lösung nach Anspruch 1, bei dem beim Schritt b) die Hypochloritionen und die Ammoniumionen, die in dem Schritt a) mit einem Molverhältnis Hypochloritionen/Ammoniumionen größer als 1 gebildet werden, reagieren gelassen werden.

4. Verfahren zur Herstellung nach einem beliebigen der Ansprüche 1 bis 3, bei dem während des Schrittes a) eine selbe wässrige Lösung, die Chloridionen und Nitrat und/oder Nitrit enthält, in die anodische Zone und die kathodische Zone eingeführt wird.

5. Verfahren zur Herstellung nach einem beliebigen der Ansprüche 1 bis 4, bei dem der Schritt b) durch Mischung von Hypochloritionen und Ammoniumionen in einer Zone, die außerhalb der kathodischen und der anodischen Zone ist, realisiert wird.

6. Verfahren zur Herstellung nach einem beliebigen der Ansprüche 1 bis 4, bei dem die Reaktion des Schritts b) in der anodischen Zone durchgeführt wird.

7. Verfahren zur Herstellung nach einem beliebigen der Ansprüche 1 bis 6, bei dem am Schluss des Schritts b) der pH-Wert des Mediums zwischen 7,5 und 9,25, insbesondere zwischen 8 und 9 liegt.

8. Verfahren zur Herstellung nach einem beliebigen der Ansprüche 1 bis 7, bei dem die anodische Zone eine Anode, die geeignet ist, die Chloridionen zu oxidieren bevor das Wasser oxidiert wird, insbesondere eine dimensionsstabile Anode, vorzugsweise eine Anode, die aus antimondotiertem Zinnoxid oder bordotiertem Diamant besteht, umfasst.

9. Verfahren zur Herstellung nach einem beliebigen der Ansprüche 1 bis 8, bei dem die kathodische Zone eine Kathode aus Kupfer oder Palladiumkupfer aufweist.

10. Verfahren zur Herstellung nach einem beliebigen der Ansprüche 1 bis 9, bei dem die Membran eine Membran aus Sinterglas oder eine kationische Membran, vorzugsweise eine Nafionmembran ist.

11. Verfahren zur Herstellung nach einem beliebigen der Ansprüche 1 bis 10, bei dem eine Referenzelektrode dem Elektrolyseur bei dem Schritt a) hinzugefügt wird, um das Potential der Anode oder der Kathode aufzuzwingen.

12. Verfahren nach einem beliebigen der vorhergehenden Ansprüche zur Herstellung einer desinfizierenden Lösung.

## Claims

1. A method for preparing a solution comprising monochloramine, comprising the steps of:
a) in an electrolyzer comprising an anodic area and a cathodic area separated by a membrane limiting the migration of hypochlorite ions:
- forming hypochlorite ions in the anodic area by oxidation of chloride ions in an aqueous solution, and
- forming ammonium ions in the cathodic area by reduction of nitrate and/or nitrite ions in an aqueous solution, and
b) reacting the ammonium ions with at least one portion of the hypochlorite ions, with a molar ratio of hypochlorite ions to ammonium ions higher than or equal to 1, the pH of the medium being higher than 7, whereby monochloramine is formed.

2. The method for preparing a solution comprising monochloramine according to claim 1, wherein, during step b), the hypochlorite ions are reacted with the ammonium ions formed in step a) with a molar ratio of hypochlorite ions to ammonium ions equal to 1.

3. The method for preparing a solution comprising monochloramine and hypochlorite ions according to claim 1, wherein, during step b), the hypochlorite ions are reacted with the ammonium ions formed in step a) with a molar ratio of hypochlorite ions to ammonium ions higher than 1.

4. The preparation method according to any one of claims 1 to 3, wherein, during step a), a same aqueous solution comprising chloride ions and nitrate and/or nitrite ions is introduced into the anodic and cathodic areas.

5. The preparation method according to any one of claims 1 to 4, wherein step b) is carried out by mixing hypochlorite ions and ammonium ions in an area outside the cathodic and anodic areas.

6. The preparation method according to any one of clams 1 to 4, wherein the reaction of step b) is done within the anodic area.

7. The preparation method according to any one of claims 1 to 6, wherein, at the end of step b), the pH of the medium is comprised between 7.5 and 9.25, in particular between 8 and 9.

8. The preparation method according to any one of claims 1 to 7, wherein the anodic area comprises an anode capable of oxidizing the chloride ions before oxidizing the water, in particular a dimensionally stable anode, preferably an anode made up of antimony doped tin oxide or boron doped diamond.

9. The preparation method according to any one of claims 1 to 8, wherein the cathodic area comprises a copper or palladium-copper cathode.

10. The preparation method according to any one of claims 1 to 9, wherein the membrane is a sintered glass membrane or a cationic membrane, preferably a Nafion membrane.

11. The preparation method according to any one of claims 1 to 10, wherein a reference electrode is added to the electrolyzer during step a) so as to impose the potential of the anode or the cathode.

12. The method according to any one of the preceding claims for preparing a disinfecting solution.
